(19) Europäisches Patentamt
European Patent Office
Office européen des brevets

(11) **EP 3 331 737 B1**

(12) **EUROPÄISCHE PATENTSCHRIFT**

(45) Veröffentlichungstag und Bekanntmachung des Hinweises auf die Patenterteilung:
**18.11.2020 Patentblatt 2020/47**

(21) Anmeldenummer: **16732608.1**

(22) Anmeldetag: **27.06.2016**

(51) Int Cl.:
**B60T 13/74** *(2006.01)* **B60T 7/04** *(2006.01)*
**F16D 65/18** *(2006.01)*

(86) Internationale Anmeldenummer:
**PCT/EP2016/064856**

(87) Internationale Veröffentlichungsnummer:
**WO 2017/021061 (09.02.2017 Gazette 2017/06)**

(54) **VERFAHREN ZUM ÜBERPRÜFEN DER PARKBREMSKRAFT IN EINEM FAHRZEUG**

METHOD FOR VERIFYING THE PARKING BRAKE FORCE IN A VEHICLE

PROCÉDÉ POUR VÉRIFIER LA FORCE DE FREIN DE STATIONNEMENT DANS UN VÉHICULE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **04.08.2015 DE 102015214809**

(43) Veröffentlichungstag der Anmeldung:
**13.06.2018 Patentblatt 2018/24**

(73) Patentinhaber: **Robert Bosch GmbH**
**70442 Stuttgart (DE)**

(72) Erfinder:
• **BAEHRLE-MILLER, Frank**
**71101 Schoenaich (DE)**
• **WOLFF, Helmut**
**74199 Untergruppenbach (DE)**

(56) Entgegenhaltungen:
**US-A1- 2013 231 839    US-A1- 2014 257 658**
**US-B2- 9 033 427**

**Beschreibung**

Die Erfindung bezieht sich auf ein Verfahren zum Überprüfen der Parkbremskraft in einem Fahrzeug mit hydraulischer Fahrzeugbremse und elektromechanischer Bremsvorrichtung.

Stand der Technik

In der DE 10 2004 004 992 A1 wird eine Feststellbremsanlage beschrieben, die einen elektrischen Bremsmotor zur Erzeugung einer das Fahrzeug im Stillstand festsetzenden Parkbremskraft umfasst. Die Feststellbremsanlage mit dem elektrischen Bremsmotor ist in die hydraulische Radbremse integriert, wobei zum Erzeugen der Parkbremskraft der Bremsmotor einen Bremskolben in Richtung einer Bremsscheibe verstellt. Bei einem regulären Bremsvorgang wird der Bremskolben von der hydraulischen Fahrzeugbremse betätigt.

Beim Parken des Fahrzeugs wird über die Feststellbremsanlage mit dem elektrischen Bremsmotor die gewünschte Parkbremskraft erzeugt. Falls festgestellt wird, dass die Parkbremskraft ein gefordertes Bremskraftniveau nicht erreicht, wird zusätzlich die hydraulische Fahrzeugbremse betätigt, über die eine zusätzliche Bremskraft erzeugt wird.

Die US 9,033,427 B2 offenbart ein Verfahren zur hydraulischen Unterstützung einer elektromechanischen Parkbremsvorrichtung über die hydraulische Betriebsbremsenfunktion. Hierbei wird die elektrisch erzeugte Parkbremskraft von der hydraulisch erzeugten Bremskraft überlagert. Bei einer Betätigung der elektromechanischen Parkbremsvorrichtung zur Erzeugung einer vorgegebenen Parkbremskraft wird die tatsächlich erzeugte Parkbremskraft mittels einer repräsentierenden Messgröße erfasst und mit einem zugeordneten Sollwert verglichen. Falls die tatsächliche Parkbremskraft kleiner ist als der Sollwert, wird zusätzlich zur Unterstützung eine hydraulische Bremskraft generiert, wobei die elektromechanische Parkbremskraft und die hydraulische Bremskraft auf den gleichen Bremskolben wirken.

Offenbarung der Erfindung

Mi dem erfindungsgemäßen Verfahren kann eine Parkbremskraft in einem Fahrzeug überprüft werden, die sowohl über eine elektromechanische Bremsvorrichtung mit elektrischem Bremsmotor als auch über eine hydraulische Fahrzeugbremse bereitgestellt wird. Bei der hydraulischen Fahrzeugbremse handelt es sich um die reguläre Bremse, die im Fahrbetrieb zum Abbremsen des Fahrzeuges eingesetzt wird. Beim Parken des Fahrzeugs wird die geforderte Parkbremskraft primär über die elektromechanische Bremsvorrichtung erzeugt, wobei die hydraulische Fahrzeugbremse ergänzend betätigt wird, falls das geforderte Parkbremskraftniveau nicht über die alleinige Betätigung der elektromechanischen Bremsvorrichtung gestellt werden kann.

Der elektrische Bremsmotor und die hydraulische Fahrzeugbremse wirken insbesondere auf den gleichen Bremskolben, der Träger eines Bremsbelages ist, welcher gegen eine Bremsscheibe gedrückt wird. Die hydraulische Fahrzeugbremse ist mit einem Bremskraftverstärker ausgestattet, um die vom Fahrer erzeugte Bremspedalkraft in einen erhöhten Bremsdruck des Bremsfluids umzusetzen.

Das erfindungsgemäße Verfahren bezieht sich auf Situationen, in denen sowohl die elektromechanische Bremsvorrichtung mit dem elektrischen Bremsmotor als auch die hydraulische Fahrzeugbremse mit dem Bremskraftverstärker aktiv sind, um eine gewünschte Parkbremskraft zu erzeugen. Werden beide Bremstypen gleichzeitig betätigt, so ist es aus Sicherheitsgründen zweckmäßig, dass die Beiträge der hydraulischen Kraft und der elektromechanischen Kraft zur gesamten Parkbremskraft differenziert werden, um die Wirksamkeit jedes Bremstyps und der von jedem Bremstyp bereitgestellten Bremskraft überprüfen und gewährleisten zu können. Mithilfe des erfindungsgemäßen Verfahrens zum Überprüfen der Parkbremskraft kann die Wirksamkeit der hydraulischen Fahrzeugbremse überwacht werden. Dies erfolgt anhand eines Vergleichs des Stellwegs des Bremskraftverstärkers der hydraulischen Fahrzeugbremse mit einem Referenzweg, wobei im Falle einer unzulässig hohen Abweichung ein Fehlersignal erzeugt wird. Das Fehlersignal kann in geeigneter Weise weiterverarbeitet werden, beispielsweise dem Fahrer zur Anzeige gebracht und/oder zur Bereitstellung einer zusätzlichen Bremskraft genutzt oder in einem Fahrerassistenzsystem verwendet werden.

Der Bremskraftverstärker weist, gemäß einer vorteilhaften Ausführung, einen Elektromotor zur Verstärkung auf, der zur Erzeugung einer hydraulischen Bremskraft betätigt wird (iBooster). Es handelt sich bei dem Bremskraftverstärker üblicherweise nicht um eine Hydraulikpumpe eines elektrischen Stabilitätsprogrammes (ESP), das gegebenenfalls zusätzlich in die hydraulische Fahrzeugbremse integriert ist. Der Bremskraftverstärker sitzt bevorzugt unmittelbar am Hauptbremszylinder der hydraulischen Fahrzeugbremse und kann über ein Steuergerät angesteuert werden. Gemäß einer alternativen Ausführung handelt es sich bei dem Bremskraftverstärker um die Hydraulikpumpe des elektronischen Stabilitätsprogramms bzw. Antiblockiersystems.

Gemäß einer vorteilhaften Ausführung wird der tatsächlich zurückgelegte Stellweg des Bremskraftverstärkers sensorisch ermittelt. Dieser Stellweg wird mit dem Referenzweg verglichen, der vorteilhafterweise aus einer Druckdifferenz zwischen einem hydraulischen Soll-Parkbremsdruck und einem niedrigeren Bremsdruck ermittelt wird, bei dem ein oder mehrere Bremskreise der hydraulischen Fahrzeugbremse hydraulisch abgetrennt werden, beispielsweise durch Schließen der Einlassventile in der hydraulischen Fahrzeugbremse. Die Erhöhung des hydraulischen Drucks nach dem Schließen der Ventile bewirkt eine elastische Verformung der Bremszange bzw. Bremszangen, wobei die elastische Verformung einem Volumen entspricht, aus dem bei Kenntnis der Zangensteifigkeit und der Geometrie des Kolbens des Bremskraftverstärkers sowie des Bremskolbens auf den Referenzweg geschlossen werden kann.

Der Druckdifferenz bei der Erhöhung des hydraulischen Bremsdrucks entspricht ein Relativstellweg des Bremskraftverstärkers, der gemessen werden kann. Aus dem Relativstellweg des Bremskraftverstärkers kann unter Berücksichtigung der Druckdifferenz und der Geometrie des Bremskraftverstärkers die Zangensteifigkeit der Bremszange der Fahrzeugbremse berechnet werden. In einem weiteren Schritt wird ein Druckäquivalent ermittelt, das einer elektromechanischen Soll-Parkbremskraft entspricht, die von der elektromechanischen Bremsvorrichtung bzw. dem elektrischen Bremsmotor aufgebracht werden soll. Aus dem Druckäquivalent und der Zangensteifigkeit der Bremszange wird ein äquivalentes Volumen ermittelt, aus dem unter Berücksichtigung der Kolbenfläche des Bremskraftverstärkers der Referenzweg berechnet wird. Dieser Referenzweg wird anschließend mit dem gemessenen Stellweg des Bremskraftverstärkers verglichen, wobei im Falle einer unzulässig hohen Abweichung ein Fehlersignal erzeugt wird.

Der Bremskraftverstärker verstärkt die vom Fahrer erzeugte Pedalbewegung in einem Hauptbremszylinder. Dementsprechend kann statt der Geometrie des Bremskraftverstärkers die Geometrie des Hauptbremszylinders berücksichtigt werden.

Wird eine unzulässig hohe Abweichung zwischen dem tatsächlichen Stellweg des Bremskraftverstärkers und dem Referenzweg festgestellt, kann gegebenenfalls ein Nachbremsvorgang durchgeführt werden, bei dem die zusätzliche Bremskraft entweder über eine Betätigung des elektrischen Bremsmotors der elektromechanischen Bremsvorrichtung und/oder über eine Betätigung des Bremskraftverstärkers der hydraulischen Fahrzeugbremse erzeugt wird.

Bei einer unzulässig hohen Abweichung zwischen dem tatsächlichen Stellweg des Bremskraftverstärkers und dem Referenzweg kann die Abweichungsrichtung einen Hinweis auf den zugrunde liegenden Fehler bieten. Ist der tatsächlich zurückgelegte Stellweg kleiner als der Referenzweg, so deutet dies auf einen verminderten Durchfluss von Bremsfluid durch eine Hydraulikleitung hin. Dementsprechend kann ein Fehlersignal erzeugt werden, das auf einen hydraulischen Fehler hinweist. Es ist aber auch möglich, dass in diesem Fall die bereitgestellte Parkbremskraft der elektromechanischen Bremsvorrichtung zu gering ist, wobei das erzeugte Fehlersignal auf die unzureichende Parkbremskraft hinweisen kann. Die Differenzierung zwischen hydraulischem und elektromechanischem Fehler erfolgt gegebenenfalls über weitere Bremsgrößen.

Falls der zurückgelegte, tatsächliche Stellweg des Bremskraftverstärkers größer ist als der Referenzweg, kann dies auf eine erhöhte Leckage in der hydraulischen Fahrzeugbremse hinweisen. Über das Fehlersignal kann entsprechend auf eine Undichtigkeit in der hydraulischen Fahrzeugbremse hingewiesen werden. Der im Vergleich zum Referenzweg größere Stellweg des Bremskraftverstärkers kann aber auch auf eine zu hohe Parkbremskraft der elektromechanischen Bremsvorrichtung hinweisen, das erzeugte Fehlersignal kann eine entsprechende Information enthalten. Auch in diesem Fall kann die Differenzierung zwischen hydraulischem und elektromechanischem Fehler gegebenenfalls über weitere Bremsgrößen erfolgen.

Die einzelnen Verfahrensschritte laufen in einem Regel- bzw. Steuergerät ab, in welchem Stellsignale zur Ansteuerung der verschiedenen Komponenten des Bremssystems mit der hydraulischen Fahrzeugbremse einschließlich Bremskraftverstärker und der elektromechanischen Bremsvorrichtung mit dem elektrischen Bremsmotor erzeugt werden. Das Bremssystem umfasst sowohl die hydraulische Fahrzeugbremse als auch die elektromechanische Bremsvorrichtung.

Weitere Vorteile und zweckmäßige Ausführungen sind den weiteren Ansprüchen, der Figurenbeschreibung und den Zeichnungen zu entnehmen. Es zeigen:

Fig. 1   eine schematische Darstellung eines Bremssystems in einem Fahrzeug, mit einer hydraulischen Fahrzeugbremse, die einen Bremskraftverstärker aufweist, wobei an der Radbremseinrichtung zusätzlich ein elektrischer Bremsmotor angeordnet ist,

Fig. 2   einen Schnitt durch eine elektromechanische Bremsvorrichtung mit einem elektrischen Bremsmotor,

Fig. 3   ein Ablaufdiagramm zum Erzeugen einer Bremskraft, welche das Fahrzeug im Stillstand festsetzt, und zum Überprüfen der Bremskraft.

Gleiche Bauteile sind mit gleichen Bezugszeichen versehen.

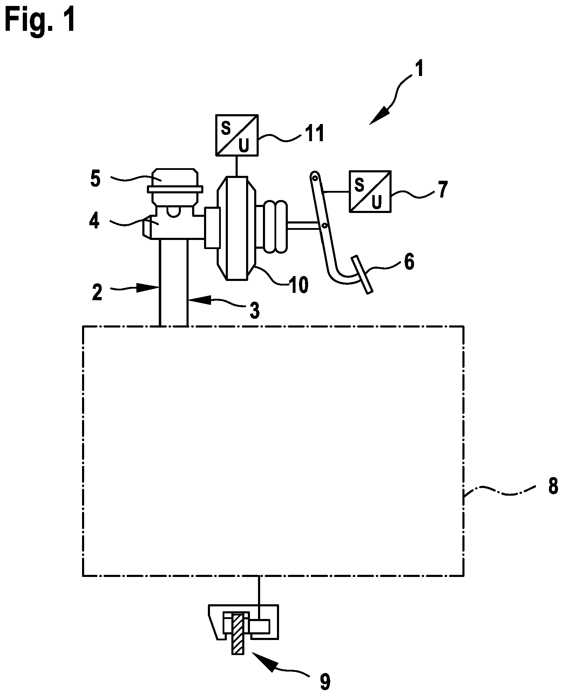

Das in Fig. 1 dargestellte Bremssystem 1 für ein Fahrzeug umfasst eine hydraulische Fahrzeugbremse mit einem Vorderachs-Bremskreis 2 und einem Hinterachs-Bremskreis 3 zur Versorgung und Ansteuerung von Radbremseinrichtungen 9 an jedem Rad des Fahrzeugs mit einem unter Hydraulikdruck stehenden Bremsfluid. Die beiden Bremskreise 2, 3 sind an einen gemeinsamen Hauptbremszylinder 4 angeschlossen, der über einen Bremsflüssigkeitsvorratsbehälter 5 mit Bremsfluid versorgt wird. Der Hauptbremszylinder 4 wird vom Fahrer über das Bremspedal 6 betätigt, der vom Fahrer ausgeübte Pedalweg wird über einen Pedalwegsensor 7 gemessen. Zwischen dem Bremspedal 6 und dem Hauptbremszylinder 4 befindet sich ein Bremskraftverstärker 10, der beispielsweise einen Elektromotor umfasst, welcher bevorzugt über ein Getriebe den Hauptbremszylinder 4 betätigt (iBooster). Die vom Pedalwegsensor 7 gemessene Stellbewegung des Bremspedals 6 wird als Sensorsignal an ein Regel- bzw. Steuergerät übermittelt, in welchem Stellsignale zur Ansteuerung des Bremskraftverstärkers 10 erzeugt werden. Die Verstärkungsbewegung des Bremskraftverstärkers 10 wird über eine Stellstange des Bremskraftverstärkers 10 übertragen, wobei der Stellweg der Stellstange über einen in den Bremskraftverstärker 10 integrierten Sensor 11 ermittelt wird.

Gegebenenfalls wird über den Sensor 11 der Stellweg des Hauptbremszylinders 4 ermittelt.

Die Versorgung der Radbremseinrichtungen 9 mit Bremsfluid erfolgt in jedem Bremskreis 2, 3 über verschiedene Schaltventile, die einschließlich weiterer Aggregate zu einer Bremshydraulik 8 gehören. Zur Bremshydraulik 8 gehört des Weiteren eine Hydraulikpumpe, die Bestandteil eines elektronischen Stabilitätsprogramms (ESP) ist.

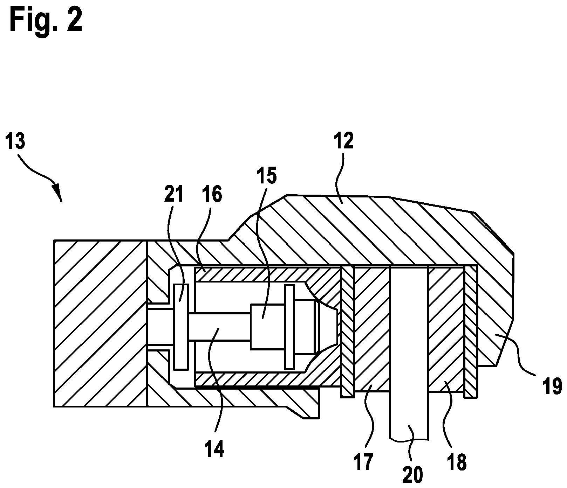

In Fig. 2 ist eine elektromechanische Bremsvorrichtung dargestellt, die bevorzugt zum Festsetzen eines Fahrzeugs im Stillstand eingesetzt wird, jedoch auch bei einer Bewegung des Fahrzeugs, insbesondere bei kleineren Fahrzeuggeschwindigkeiten unterhalb eines Geschwindigkeits-Grenzwerts eingesetzt werden kann. Die elektromechanische Bremsvorrichtung umfasst einen Bremssattel 12 mit einer Zange 19, welche eine Bremsscheibe 20 übergreift. Als Stellglied weist die Bremsvorrichtung einen Gleichstrom-Elektromotor als Bremsmotor 13 auf, dessen Rotorwelle eine Spindel 14 rotierend antreibt, auf der eine Spindelmutter 15 drehbar gelagert ist. Bei einer Rotation der Spindel 14 wird die Spindelmutter 15 axial verstellt. Die Spindelmutter 15 bewegt sich innerhalb eines Bremskolbens 16, der Träger eines Bremsbelags 17 ist, welcher von dem Bremskolben 16 gegen die Bremsscheibe 20 gedrückt wird. Auf der gegenüberliegenden Seite der Bremsscheibe 20 befindet sich ein weiterer Bremsbelag 18, der ortsfest an der Zange 19 gehalten ist.

Innerhalb des Bremskolbens 16 kann sich die Spindelmutter 15 bei einer Drehbewegung der Spindel 14 axial nach vorne in Richtung auf die Bremsscheibe 20 zu bzw. bei einer entgegen gesetzten Drehbewegung der Spindel 14 axial nach hinten bis zum Erreichen eines Anschlags 21 bewegen. Zum Erzeugen einer Klemmkraft beaufschlagt die Spindelmutter 15 die innere Stirnseite des Bremskolbens 16, wodurch der axial verschieblich in der Bremsvorrichtung gelagerte Bremskolben 16 mit dem Bremsbelag 17 gegen die zugewandte Stirnfläche der Bremsscheibe 20 gedrückt wird.

Die elektromechanische Bremsvorrichtung ist in die Radbremseinrichtung 9 (Fig. 1) der hydraulischen Fahrzeugbremse integriert, indem auf den Bremskolben 16 der hydraulische Druck der hydraulischen Fahrzeugbremse wirkt, mit der das Fahrzeug während der Fahrt abgebremst wird. Der hydraulische Druck kann auch im Fahrzeugstillstand bei Betätigung der elektromechanischen Bremsvorrichtung unterstützend wirksam sein, so dass sich die Gesamt-Bremskraft aus dem elektromotorisch gestellten Anteil und dem hydraulischen Anteil zusammensetzt. Ebenso können während der Fahrt des Fahrzeugs sowohl die hydraulische Fahrzeugbremse als auch die elektromechanische Bremsvorrichtung betätigt werden und jeweils eine Bremskraft erzeugen.

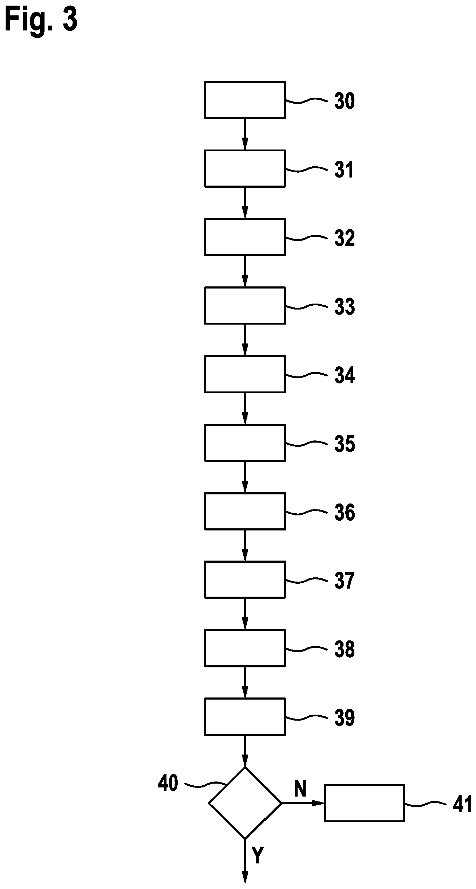

Um sicherzustellen, dass bei einem Parkbremsvorgang, bei dem sowohl die hydraulische Fahrzeugbremse als auch die elektromechanische Bremsvorrichtung betätigt wird, der hydraulisch gestellte Anteil der Parkbremskraft ausreichend groß ist, wird das in Fig. 3 dargestellte Verfahren zur Überprüfung der Parkbremskraft durchgeführt. Zunächst wird in einem ersten Verfahrensschritt 30 der Parkbremswunsch festgestellt und der Parkbremsvorgang durch Aktivierung sowohl der hydraulischen Fahrzeugbremse als auch der elektromechanischen Bremsvorrichtung eingeleitet. Der Parkbremswunsch, der entweder manuell vom Fahrer oder automatisiert über eine Fahrerassistenzfunktion ausgelöst wird, kann in einem elektronischen Stabilitätsprogramm (ESP) im Fahrzeug erkannt werden. Das elektronische Stabilitätsprogramm gibt den Parkbremswunsch an den Bremskraftverstärker 10 (iBooster) der hydraulischen Fahrzeugbremse und die elektromechanische Bremsvorrichtung mit dem elektrischen Bremsmotor weiter.

Im nächsten Schritt 31 wird über den Bremskraftverstärker 10 ein vorgegebener hydraulischer Bremsdruck erzeugt, der gegebenenfalls steigungsabhängig sein kann, um sicherzustellen, dass das an einer Steigung abgestellte Fahrzeug nicht versehentlich wegrollt. Besteht beispielsweise eine Druckanforderung im Bremskraftverstärker 10 von 40 bar, wird zunächst ein geringerer Druck von beispielsweise 30 bar erzeugt. Anschließend wird im nächsten Verfahrensschritt 32 durch Schließen der Einlassventile derjenige Bremskreis in der hydraulischen Fahrzeugbremse abgetrennt, an dem die elektromechanische Bremsvorrichtung mit dem Bremsmotor nicht wirksam ist; diese befindet sich nur an den Radbremseinrichtungen eines Bremskreises, beispielsweise an der Hinterachse des Fahrzeuges, wohingegen der zweite Bremskreis ohne elektromechanische Bremsvorrichtung ausgestattet ist.

Nach dem Schließen der Einlassventile in dem Bremskreis ohne elektromechanische Bremsvorrichtung wird im nächsten Schritt 33 der Druck im zweiten Bremskreis, an welchem die elektromechanische Bremsvorrichtung angeordnet ist, weiter bis zum Zieldruck von beispielsweise 40 bar erhöht. Im Schritt 34 wird der zugehörige Relativstellweg des Bremskraftverstärkers, der der Druckerhöhung von 30 bar auf 40 bar entspricht, sensorisch gemessen. Daraufhin kann im Schritt 35 die Zangensteifigkeit $c_{Cal}$ der Bremszange der Fahrzeugbremse unter Berücksichtigung der Druckdifferenz zwischen dem niedrigeren Bremsdruck $p_{low}$ von 30 bar und dem höheren, hydraulischen Soll-Parkbremsdruck $p_{soll}$ von 40 bar gemäß

$$c_{Cal} = \frac{\Delta p}{\Delta V} = \frac{\Delta p}{\Delta s \cdot A_{Hz}} = \frac{4 \cdot \Delta p}{\Delta s \cdot \pi \cdot d_{Hz}^2}$$

unter Berücksichtigung der Geometrie des Stellkolbens des Bremskraftverstärkers mit der Kolbenfläche $A_{HZ}$ bzw. dem Kolbendurchmesser $d_{HZ}$ berechnet werden.

Im nächsten Schritt 36 wird das Druckäquivalent $p_{em}$, das einer elektromechanischen Soll-Parkbremskraft $F_{em}$ entspricht, unter Berücksichtigung der Kolbenfläche $A_{pist}$ des Bremskolbens gemäß

$$p_{em} = \frac{F_{em}}{A_{pist}}$$

berechnet. Die elektromechanische Soll-Parkbremskraft $F_{em}$ wird beispielsweise mit 10 kN vorgegeben.

Im folgenden Schritt 37 wird das äquivalente Volumen $\Delta V_{em}$, das dem Druckäquivalent $p_{em}$ entspricht, aus dem Verhältnis von Druckäquivalent $p_{em}$ und Zangensteifigkeit $c_{cal}$ ermittelt:

$$\Delta V_{em} = \frac{p_{em}}{c_{Cal}}$$

Aus dem äquivalenten Volumen $\Delta V_{em}$ kann unter Berücksichtigung der Kolbenfläche $A_{Hz}$ des Bremskraftverstärkers gemäß

$$s_{ges} = \frac{\Delta V_{em}}{A_{Hz}}$$

der Referenzweg $s_{ges}$ berechnet werden.

Im nächsten Schritt 39 wird der tatsächliche Stellweg $s_{real}$ des Bremskraftverstärkers sensorisch ermittelt. Im Schritt 40 erfolgt danach ein Vergleich zwischen dem tatsächlichen Stellweg $s_{real}$ des Bremskraftverstärkers mit dem Referenzweg $s_{ges}$. Stimmen beide Werte innerhalb eines zulässigen Toleranzbereiches überein, wird der Ja-Verzweigung ("Y") gefolgt, es liegt kein Fehler vor, so dass davon ausgegangen werden kann, dass der hydraulische Parkbremsanteil korrekt ist. Stimmen dagegen der tatsächliche Stellweg $s_{real}$ des Bremskraftverstärkers und der Referenzweg $s_{ges}$ nicht überein, wird der Nein-Verzweigung ("N") folgend zum nächsten Schritt 41 vorgerückt, indem ein Fehlersignal erzeugt wird. Das Fehlersignal kann dem Fahrer zur Anzeige gebracht werden und/oder im Fahrzeug weiterverarbeitet werden, beispielsweise zu einem Nachspannvorgang in der elektromechanischen Bremsvorrichtung und/oder zu einer Druckerhöhung des hydraulischen Bremsdrucks führen.

Hierbei kann unterschieden werden, ob der tatsächliche Stellweg $s_{real}$ kleiner oder größer ist als der Referenzweg $s_{ges}$. Ist der Stellweg $s_{real}$ kleiner als der Referenzweg $s_{es}$, so kann davon ausgegangen werden, dass nicht ausreichend Bremsfluid zu den Radbremseinrichtungen gelangt, beispielsweise aufgrund einer defekten Hydraulikleitung, die in ihrem Durchfluss gehindert ist. Zusätzlich oder alternativ ist es auch möglich, dass die bereitgestellte Parkbremskraft von der elektromechanischen Bremsvorrichtung zu gering ist. In beiden Fällen kann der Fahrer auf die zu geringe Parkbremskraft hingewiesen werden.

Ist der tatsächliche Stellweg $s_{real}$ größer als der berechnete Referenzweg $s_{ges}$, deutet dies auf eine erhöhte Leckage der hydraulischen Fahrzeugbremse im betrachteten Druckbereich hin. Dementsprechend können Undichtigkeiten in der Fahrzeugbremse früher als mit konventionellen Systemen erfasst werden. Gegebenenfalls ist bei einem höheren, tatsächlichen Stellweg im Vergleich zum Referenzweg auch die von der elektromechanischen Bremsvorrichtung bereitgestellte Parkbremskraft zu hoch. Auch in diesen Fällen kann dem Fahrer ein Fehlersignal zur Anzeige gebracht werden.

**Patentansprüche**

1. Verfahren zum Überprüfen der Parkbremskraft in einem Fahrzeug, bei dem sowohl eine hydraulische Fahrzeugbremse mit Bremskraftverstärker (10) als auch eine elektromechanische Bremsvorrichtung mit einem elektrischen Bremsmotor (13) aktiv sind und zur Erzeugung einer gewünschten Parkbremskraft einen Bremskolben (16) verstellen, wobei der Stellweg ($s_{real}$) des Bremskraftverstärkers (10) mit einem Referenzweg ($s_{ges}$) verglichen wird, wobei im Falle einer unzulässig hohen Abweichung zwischen dem Stellweg ($s_{real}$) des Bremskraftverstärkers (10) und dem Referenzweg ($s_{ges}$) ein Fehlersignal erzeugt wird.

2. Verfahren nach Anspruch 1, **dadurch gekennzeichnet, dass** der Stellweg ($s_{real}$) des Bremskraftverstärkers (10) bzw. eines vom Bremskraftverstärker (10) beaufschlagten Hauptbremszylinders (4) sensorisch ermittelt wird.

3. Verfahren nach Anspruch 1 oder 2, **dadurch gekennzeichnet, dass** der Referenzweg ($s_{ges}$) unter Berücksichtigung der Druckdifferenz ($\Delta p$) zwischen einem hydraulischen Soll-Parkbremsdruck ($p_{soll}$) und einem niedrigeren Bremsdruck ($p_{low}$) ermittelt wird, bei dem ein oder mehrere Bremskreise der hydraulischen Fahrzeugbremse hydraulisch abgetrennt werden.

4. Verfahren nach Anspruch 3, **dadurch gekennzeichnet, dass** ein Relativstellweg ($\Delta s$) des Bremskraftverstärkers (10), der der Druckdifferenz ($\Delta p$) vom niedrigeren Bremsdruck ($p_{low}$) zum höheren hydraulischen Soll-Parkbremsdruck ($p_{soll}$) entspricht,

ermittelt und der Berechnung des Referenzwegs ($s_{ges}$) zugrunde gelegt wird. ($s_{ges}=f(\Delta s)$)

5. Verfahren nach Anspruch 4, **dadurch gekennzeichnet, dass** aus dem Relativstellweg ($\Delta s$) des Bremskraftverstärkers (10) bzw. des Hauptbremszylinders (4) und der Druckdifferenz ($\Delta p$) die Zangensteifigkeit ($c_{Cal}$) einer Bremszange der Fahrzeugbremse berechnet wird, wobei aus der Zangensteifigkeit ($c_{Cal}$) und einem Druckäquivalent ($p_{em}$), das der elektromechanischen Soll-Parkbremskraft ($F_{em}$) entspricht, ein äquivalentes Volumen ($\Delta V_{em}$) ermittelt wird, aus dem der Referenzweg ($s_{ges}$) berechnet wird:

$$c_{Cal} = \frac{\Delta p}{\Delta V} = \frac{\Delta p}{\Delta s \cdot A_{Hz}} = \frac{4 \cdot \Delta p}{\Delta s \cdot \pi \cdot d_{Hz}^2}$$

$$\Delta V_{em} = \frac{p_{em}}{c_{Cal}}, \quad p_{em} = \frac{F_{em}}{A_{pist}}$$

$$s_{ges} = \frac{\Delta V_{em}}{A_{Hz}}$$

wobei

$\Delta p$ die Druckdifferenz zwischen niedrigerem Bremsdruck ($p_{low}$) und höherem hydraulischen Soll-Parkbremsdruck ($p_{soll}$)
$\Delta s$ den Relativstellweg des Bremskraftverstärkers bei der Druckdifferenz $\Delta p$
$\Delta V_{em}$ ein äquivalentes Volumen
$A_{Hz}$ die Kolbenfläche des Bremskraftverstärkers bzw. des Hauptbremszylinders
$c_{Cal}$ die Zangensteifigkeit der Bremszange der Fahrzeugbremse
$F_{em}$ die elektromechanische Soll-Parkbremskraft
$p_{em}$ das Druckäquivalent, das der elektromechanischen Soll-Klemmkraft ($F_{em}$)
$A_{pist}$ die Bremskolbenfläche eines Bremskolbens
$s_{ges}$ den Referenzweg bezeichnen.

6. Verfahren nach einem der Ansprüche 1 bis 5, **dadurch gekennzeichnet, dass** der Referenzweg ($s_{ges}$) unter Berücksichtigung einer elektromechanischen Soll-Klemmkraft ($F_{em}$) bestimmt wird.

7. Verfahren nach einem der Ansprüche 1 bis 6, **dadurch gekennzeichnet, dass** der Bremskraftverstärker (10) einen Elektromotor zur Verstärkung (iBooster) aufweist, der zur Erzeugung einer hydraulischen Bremskraft betätigt wird.

8. Verfahren nach einem der Ansprüche 1 bis 7, **dadurch gekennzeichnet, dass** das Fehlersignal optisch und/oder akustisch angezeigt wird.

9. Verfahren nach einem der Ansprüche 1 bis 8, **dadurch gekennzeichnet, dass** das Fehlersignal zu einem Nachspannvorgang führt, bei dem zusätzliche Bremskraft über eine Betätigung des elektrischen Bremsmotors (13) erzeugt wird.

10. Verfahren nach einem der Ansprüche 1 bis 9, **dadurch gekennzeichnet, dass** das Fehlersignal zu einem Nachbremsvorgang führt, bei dem zusätzliche Bremskraft über eine Betätigung des Bremskraftverstärkers (10) der hydraulischen Fahrzeugbremse erzeugt wird.

11. Verfahren nach einem der Ansprüche 1 bis 10, **dadurch gekennzeichnet, dass** das Verfahren erst durchgeführt wird, wenn bei einer Betätigung der elektromechanischen Bremsvorrichtung der Klemmkraftaufbau beginnt.

12. Regel- bzw. Steuergerät zur Durchführung des Verfahrens nach einem der Ansprüche 1 bis 11.

13. Bremssystem in einem Fahrzeug, mit einer hydraulischen Fahrzeugbremse und einer elektromechanischen Bremsvorrichtung mit einem elektrischen Bremsmotor (13) und mit einem Regel- bzw. Steuergerät nach Anspruch 12 zur Ansteuerung der einstellbaren Komponenten des Bremssystems.

**Claims**

1. Method for verifying the parking brake force in a vehicle, in which both a hydraulic vehicle brake with a brake booster (10) and also an electromechanical brake mechanism with an electric brake motor (13) are active and for producing a desired parking brake force displace a brake piston (16), wherein the travel ($s_{real}$) of the brake booster (10) is compared with a reference travel ($s_{ges}$), wherein an error signal is produced in the case of an impermissibly large deviation between the travel ($s_{real}$) of the brake booster (10) and the reference travel ($S_{ges}$).

2. Method according to Claim 1, **characterized in that** the travel ($s_{real}$) of the brake booster (10) or of a brake master cylinder (4) that is acted upon by the brake booster (10) is determined by sensor.

3. Method according to Claim 1 or 2, **characterized in that** the reference travel ($s_{ges}$) is determined taking into account the pressure difference ($\Delta p$) between a hydraulic target parking brake pressure ($p_{soll}$) and a lower brake pressure ($p_{low}$), at which one or more brake circuits of the hydraulic vehicle brake are hydraulically isolated.

4. Method according to Claim 3, **characterized in that** a relative displacement ($\Delta s$) of the brake booster (10), which corresponds to the pressure difference ($\Delta p$) of the lower brake pressure ($p_{low}$) from the higher hydraulic target parking brake pressure ($p_{soll}$), is determined and forms the basis of the calculation of the reference travel ($s_{ges}$). ($s_{ges}=f(\Delta s)$)

5. Method according to Claim 4, **characterized in that** the stiffness ($c_{Cal}$) of a brake caliper of the vehicle brake is calculated from the relative displacement ($\Delta s$) of the brake booster (10) or the brake master cylinder (4) and the pressure difference ($\Delta p$), wherein from the stiffness of the caliper ($c_{Cal}$) and an equivalent pressure ($p_{em}$), which corresponds to the electromechanical target parking brake force ($F_{em}$), an equivalent volume ($\Delta V_{em}$) is determined, from which the reference travel ($s_{ges}$) is calculated:

$$c_{Cal} = \frac{\Delta p}{\Delta V} = \frac{\Delta p}{\Delta s \cdot A_{Hz}} = \frac{4 \cdot \Delta p}{\Delta s \cdot \pi \cdot d_{Hz}^2}$$

$$\Delta V_{em} = \frac{p_{em}}{c_{Cal}}, \qquad p_{em} = \frac{F_{em}}{A_{pist}}$$

$$s_{ges} = \frac{\Delta V_{em}}{A_{Hz}}$$

wherein

$\Delta p$ denotes the pressure difference between a lower brake pressure ($p_{low}$) and a higher hydraulic target parking brake pressure ($p_{soll}$)
$\Delta s$ denotes the relative displacement of the brake booster for the pressure difference $\Delta p$
$\Delta V_{em}$ denotes an equivalent volume
$A_{Hz}$ denotes the piston area of the brake booster or the brake master cylinder
$c_{Cal}$ denotes the stiffness of the brake caliper of the vehicle brake
$F_{em}$ denotes the electromechanical target parking brake force
$p_{em}$ denotes the equivalent pressure of the electromechanical target clamping force ($F_{em}$)
$A_{pist}$ denotes the brake piston area of a brake piston
$s_{ges}$ denotes the reference travel.

6. Method according to any one of Claims 1 to 5, **char-**

**acterized in that** the reference travel ($s_{ges}$) is determined taking into account an electromechanical target clamping force ($F_{em}$).

7. Method according to any one of Claims 1 to 6, **characterized in that** the brake booster (10) comprises an electric motor for boosting (iBooster) that is actuated to produce a hydraulic braking force.

8. Method according to any one of Claims 1 to 7, **characterized in that** the error signal is indicated visually and/or audibly.

9. Method according to any one of Claims 1 to 8, **characterized in that** the error signal results in a further clamping process, during which additional braking force is produced by actuating the electric brake motor (13).

10. Method according to any one of Claims 1 to 9, **characterized in that** the error signal results in a further braking process, during which additional braking force is produced by actuating the brake booster (10) of the hydraulic vehicle brake.

11. Method according to any one of Claims 1 to 10, **characterized in that** the method is only carried out once the build-up of a clamping force starts on actuating the electromechanical brake mechanism.

12. Regulating unit or control unit for carrying out the method according to any one of Claims 1 to 11.

13. Brake system in a vehicle, with a hydraulic vehicle brake and an electromechanical brake mechanism with an electric brake motor (13) and with a regulating unit or control unit according to Claim 12 for actuating the adjustable components of the brake system.

**Revendications**

1. Procédé de vérification de la force du frein de stationnement dans un véhicule dans lequel à la fois un frein de véhicule hydraulique pourvu d'un servofrein (10) et un dispositif de frein électromécanique pourvu d'un moteur de frein électrique (13) sont actifs et règlent un piston de frein (16) pour générer une force de frein de stationnement souhaitée, la course de réglage ($S_{real}$) du servofrein (10) étant comparée à une course de référence ($S_{ges}$), un signal d'erreur étant généré en cas d'écart excessivement élevé entre la course de réglage ($S_{real}$) du servofrein (10) et la course de référence ($S_{ges}$).

2. Procédé selon la revendication 1, **caractérisé en ce que** la course de réglage ($S_{real}$) du servofrein (10) ou d'un cylindre de frein principal (4), sollicité par le servofrein (10), est déterminée par des capteurs.

**3.** Procédé selon la revendication 1 ou 2, **caractérisé en ce que** la course de référence (s$_{ges}$) est déterminée avec prise en compte de la différence de pression ($\Delta$p) entre une pression de frein de stationnement cible hydraulique (p$_{cible}$) et une pression de freinage inférieure (p$_{low}$) à laquelle un ou plusieurs circuits de freinage des freins hydrauliques du véhicule sont déconnectés hydrauliquement.

**4.** Procédé selon la revendication 3, **caractérisé en ce qu'**une course de réglage relatif ($\Delta$s) du servofrein (10), qui correspond à la différence de pression ($\Delta$p) de la pression de freinage inférieure (p$_{low}$) à la pression de frein de stationnement cible hydraulique supérieure (p$_{cible}$), est déterminée et utilisée pour calculer la course de référence (s$_{ges}$). (s$_{ges}$ = f($\Delta$s))

**5.** Procédé selon la revendication 4, **caractérisé en ce que** la rigidité (c$_{Cal}$) d'un étrier du frein du véhicule est calculée à partir de la course de réglage relative ($\Delta$s) du servofrein (10) ou du cylindre de frein principal (4) et de la différence de pression ($\Delta$p), un volume équivalent ($\Delta$V$_{em}$), à partir duquel la distance de référence (sges) est calculée, étant déterminé à partir de la rigidité (c$_{Cal}$) et d'une pression équivalente (p$_{em}$) qui correspond à la force de frein de stationnement cible électromécanique (F$_{em}$) :

$$c_{Cal} = \frac{\Delta p}{\Delta V} = \frac{\Delta p}{\Delta S \cdot A_{Hz}} = \frac{4 \cdot \Delta p}{\Delta s \cdot \pi \cdot d_{Hz}^2}$$

$$\Delta V_{em} = \frac{p_{em}}{c_{Cal}}, \quad p_{em} = \frac{F_{em}}{A_{pist}},$$

$$s_{ges} = \frac{\Delta V_{em}}{A_{Hz}},$$

$\Delta$p étant la différence de pression entre la pression de freinage inférieure (p$_{low}$) et la pression de frein de stationnement cible hydraulique supérieure (p$_{cible}$)
$\Delta$s étant la course relative du servofrein pour la différence de pression $\Delta$p
$\Delta$V$_{em}$ étant un volume équivalent
A$_{Hz}$ étant la surface du piston du servofrein ou du cylindre de frein principal
C$_{Cal}$ étant la rigidité de l'étrier de frein du véhicule F$_{em}$ étant la force de frein de stationnement cible électromécanique
p$_{em}$ étant la pression équivalente qui correspond à la force de serrage électromécanique cible (F$_{em}$)
A$_{pist}$ étant la surface d'un piston de frein

s$_{ges}$ étant la course de référence.

**6.** Procédé selon l'une des revendications 1 à 5, **caractérisé en ce que** la course de référence (s$_{ges}$) est déterminée par prise en compte d'une force de serrage électromécanique cible (F$_{em}$).

**7.** Procédé selon l'une des revendications 1 à 6, **caractérisé en ce que** le servofrein (10) comporte un moteur électrique d'amplification (iBooster), lequel est actionné pour générer une force de freinage hydraulique.

**8.** Procédé selon l'une des revendications 1 à 7, **caractérisé en ce que** le signal d'erreur est indiqué par des moyens optiques et/ou acoustiques.

**9.** Procédé selon l'une des revendications 1 à 8, **caractérisé en ce que** le signal d'erreur conduit à un processus de resserrage dans lequel une force de freinage supplémentaire est générée par l'actionnement du moteur de frein électrique (13).

**10.** Procédé selon l'une des revendications 1 à 9, **caractérisé en ce que** le signal d'erreur entraîne un processus de post-freinage dans lequel une force de freinage supplémentaire est générée par l'actionnement du servofrein (10) du frein hydraulique du véhicule.

**11.** Procédé selon l'une des revendications 1 à 10, **caractérisé en ce que** le procédé n'est mis en œuvre que lorsque l'établissement de la force de serrage commence lors de l'actionnement du dispositif de freinage électromécanique.

**12.** Dispositif de régulation ou de commande destiné à mettre en œuvre le procédé selon l'une des revendications 1 à 11.

**13.** Système de freinage dans un véhicule, ledit système comprenant un frein hydraulique de véhicule et un dispositif de freinage électromécanique pourvu d'un moteur électrique de frein (13) et un dispositif de régulation ou de commande selon la revendication 12 destiné à commander les composants réglables du système de freinage.

**Fig. 1**

# Fig. 2

# Fig. 3

**IN DER BESCHREIBUNG AUFGEFÜHRTE DOKUMENTE**

**In der Beschreibung aufgeführte Patentdokumente**

- DE 102004004992 A1

- US 9033427 B2